# EUROPÄISCHE PATENTSCHRIFT

(11) **EP 0 760 200 B1**
(45) Veröffentlichungstag und Bekanntmachung des Hinweises auf die Patenterteilung: **19.01.2000**
(21) Anmeldenummer: 96110548.3
(22) Anmeldetag: 29.06.1996
(51) Int. Cl.: A01D 45/02

(54) **Maschine zum reihenunabhängigen Mähen und Häckseln von Mais und dgl. stengelartigem Erntegut**
Machine for mowing and chopping maize and suchlike stalk crops
Machine pour faucher et hacher de mais et des plantes à tiges similaires

(30) Priorität: 30.08.1995 DE 19531918
(43) Veröffentlichungstag der Anmeldung: 05.03.1997
(73) Patentinhaber: Maschinenfabrik Kemper GmbH & Co. KG, 48703 Stadtlohn (DE)
(72) Erfinder: Wübbels, Richard, 46325 Borken (DE); Wolters, Norbert, 48712 Gescher (DE)
(74) Vertreter: Busse & Busse Patentanwälte

(56) Entgegenhaltungen:
- EP-A- 0 099 527
- EP-A- 0 286 882
- EP-A- 0 508 189
- DE-A- 4 002 344
- DE-U- 9 409 012
- FR-A- 2 408 293

## Beschreibung

Die Erfindung betrifft eine Maschine zum reihenunabhängigen Mähen und Häckseln von Mais und dgl. stengelartigem, insbesondere einer Ganzpflanzensilage zuzuführendem Erntegut nach dem Oberbegriff des Patentanspruchs 1.

Bei einer bekannten derartigen Maschine (EP-A- 0 099 527), die häufig auch kurz als Mais-Mähhäcksler bezeichnet wird, werden die Stengel des Ernteguts in aufrechter Stellung eingezogen und gemäht und anschließend dem Häcksler mit den vorgeschalteten Einschubwalzen zugeführt. Durch eine Mehrzahl von über den vorderen Arbeitsbereich der Maschine verteilt ausgebildeten Einzugs- und Schnittstellen wird eine von Reihenabstand und Reihenrichtung des Ernteguts unabhängige Arbeitsweise der Einzugs- und Mähtrommeln erreicht, so daß die Maschine auch bei Breitsaat, vergleichbar einem Mähdrescher im Getreide, einsetzbar ist. Darüber hinaus kann mit Hilfe der an den Einzugs- und Mähtrommeln vorgesehenen Mitnehmerzähne auch geknicktes Erntegut, z.B. Lagermais, einwandfrei aufgenommen werden.

Im Betrieb der bekannten Maschine hat sich jedoch gezeigt, daß sich in Abhängigkeit vom Erntegut Schwierigkeiten bei der Förderung des geschnittenen Ernteguts von den äußeren Einzugs- und Mähtrommeln über die als Überführungsorgan wirkenden inneren Einzugs- und Mähtrommeln zu den Einschubwalzen des Häckslers zur gebündelten Einspeisung des Ernteguts in deren Einführungsspalt ergeben können, die mit einer zunehmenden Arbeitsbreite der Maschine beispielsweise bis auf etwa 6 m bei entsprechend erhöhter Anzahl der zum Einsatz kommenden Einzugs- und Mähtrommeln wegen der längeren Förderwege verstärkt auftreten.

Der Erfindung liegt daher die Aufgabe zugrunde, eine Maschine zum Mähen und Häckseln von Mais und dgl. stengelartigem Erntegut zu schaffen, bei der dieses sicher und schnell in den Einführungsspalt der Einschubwalzen des Häckslers in gebündelter zusammengefaßter Form, auch bei großen Arbeitsbreiten der Maschine, eingespeist werden kann.

Ausgehend von einer Maschine der eingangs angegebenen Art wird diese Aufgabe nach der Erfindung durch die im kennzeichnenden Teil des Patentanspruchs 1 angegebenen Merkmale gelöst. Weitere Merkmale und vorteilhafte Einzelheiten der Erfindung ergeben sich aus den Unteransprüchen.

Bei der erfindungsgemäßen Ausgestaltung eines Mais-Mähhäckslers besitzen die Führungswände zum Häcksler hin in Draufsicht die Form einer sich quer zur Längsmittelebene der Maschine ausbreitenden Welle, deren Wellenform vorzugsweise einer flachen Sinuskurve entspricht. Die flache Wellenform begünstigt eine schonende, schnelle Förderung des geschnittenen Erntegutes durch die Förderkanäle von den äußeren Einzugs- und Mähtrommeln über die zugleich als Überführungsorgane wirkenden inneren Einzugs- und Mähtrommeln mittels ihrer Mitnehmerzähne zum Häcksler hin. Die Förderung des Erntegutes wird dabei unterstützt durch die im Zwickelbereich zwischen zwei benachbarten Einzugs- und Mähtrommeln in Fahrtrichtung hinter diesen angeordneten Querfördertrommeln, die mit ihren abstehenden Mitnehmerzähnen durch Durchtrittsschlitze in der wellenförmigen Führungswand bei ihrem Umlauf hindurchtreten und in den Führungskanal für das geschnittene Erntegut eingreifen. Durch das Einsetzen dieser Querfördertrommeln an den für die Förderung des Erntegutes als kritisch erkannten Zwickelbereichen zwischen zwei zum Häcksler hin aufeinanderfolgenden Einzugs- und Mähtrommeln, insbesondere nahe der vertikalen Längsmittelebene der Maschine, sind Förderprobleme auch bei großen Arbeitsbreiten bis zu etwa 6 m, wozu insgesamt 8 Einzugsund Mähtrommeln, jeweils vier zu beiden Seiten der vertikalen Längsmittelebene der Maschine, vorgesehen sein können, weitestgehend vermieden.

In der nachstehenden Beschreibung ist die Erfindung mit weiteren Merkmalen und Vorteilen anhand einer Zeichnung näher erläutert, in der ein Ausführungsbeispiel des Gegenstands der Erfindung schematisch veranschaulicht ist; in der Zeichnung zeigt:
- Fig. 1: eine Draufsicht auf den in Fahrtrichtung vorderen Bereich der Maschine mit insgesamt acht Einzugs- und Mähtrommeln und lediglich durch seine Einschubwalzen angedeutetem Häcksler,
- Fig. 2: eine Draufsicht auf eine Hälfte der Maschine gemäß Fig. 1 in gegenüber dieser vergrößertem Maßstab,
- Fig. 3: eine perspektivische Ansicht der Maschine, wiederum auf eine Maschinenhälfte beschränkt, mit bereichsweise weggelassenen bzw. nur angedeuteten Bauteilen zur Veranschaulichung bestimmter Einzelheiten der Maschine und
- Fig. 4: einen Schnitt nach der Linie IV-IV der Fig. 2.

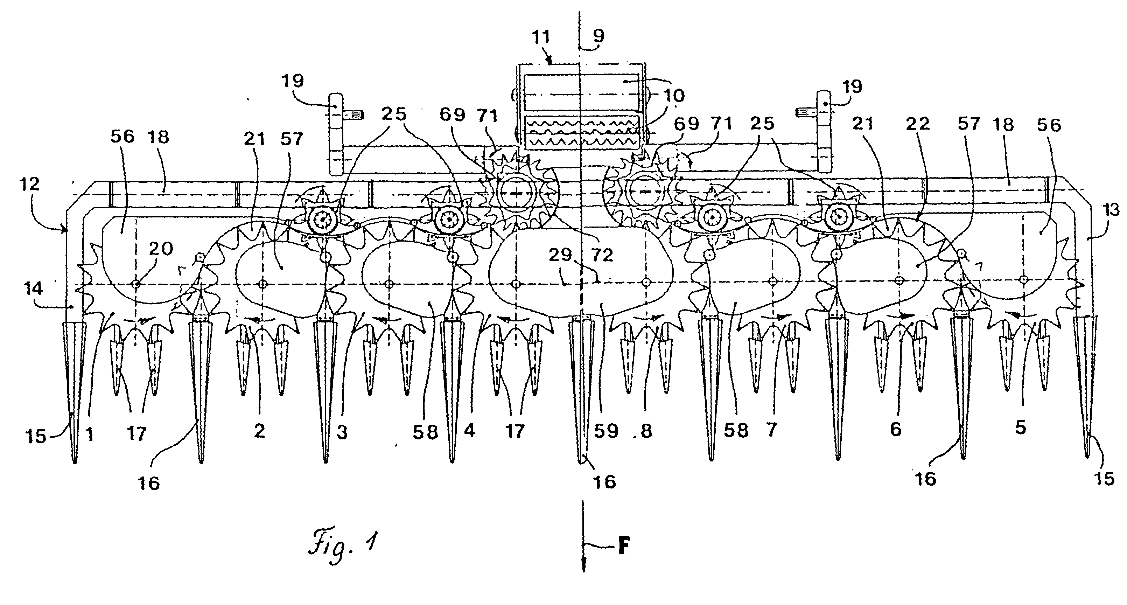

Die gemäß Fig. 1 in Arbeits- bzw. Fahrtrichtung - Pfeil F - vorbewegte Maschine kann, wie bei dem dargestellten Ausführungsbeispiel, als Anbaugerät für einen Schlepper oder aber auch als Selbstfahrer ausgebildet sein und umfaßt bei dem dargestellten Beispiel insgesamt acht Einzugs- und Mähtrommeln 1 bis 8, von denen die Einzugsund Mähtrommeln 1 bis 4 auf der einen und die Einzugs- und Mähtrommeln 5 bis 8 auf der anderen Seite einer vertikalen Längsmittelebene 9 angeordnet sind, die eine Symmetrieebene für die Maschine in dem dargestellten Umfang bildet. Die Einzugs- und Mähtrommeln 1 bis 8 sind in Fahrtrichtung F dem nur mit seinen vorgeordneten Einschubwalzen 10 angedeuteten Häcksler 11 ihrerseits vorgeordnet. Die Einschubwalzen 10 definieren einen waagerechten Einführungsspalt für das geschnittene Erntegut.

Die Einzugs- und Mähtrommeln 1 bis 8 sind von einem an der Vorderseite, in Fahrtrichtung F, offenen Maschinenrahmen 12 seitlich und rückseitig umgeben. Der Maschinenrahmen 12 umfaßt seitliche Führungen 13 und 14, die zusammen die Arbeitsbreite der Maschine bestimmen. Die seitliche Führungen 13 und 14 laufen vorn jeweils in einer Teilerspitze 15 aus, die als Blattheber für das Erntegut wirkt und den Mähschnitt vorbereitet. Innerhalb der Arbeitsbreite der Maschine sind im Bereich vor dem Zwickel zwischen jeweils zwei benachbarten Einzugs- und Mähtrommeln 1 bis 8 weitere Teilerspitzen 16 von der gleichen Länge wie die Teilerspitzen 15 angeordnet, und zwischen den Teilerspitzen 15, 16 befinden sich je zwei voneinander beabstandete kurze Teilerspitzen 17. Die Teilerspitzen 16 und 17 sind in nicht näher dargestellter Weise unterseitig am Maschinenrahmen 12 befestigt.

An der Rückseite des Maschinenrahmens 12 ist beidseits der vertikalen Längsmittelebene 9 je ein Rahmenrohr 18 festgelegt, das jeweils einen Hauptantriebsstrang für die Einzugs- und Mähtrommeln 1 bis 4 bzw. 5 bis 8 enthält. Der Antrieb wird jeweils über ein Stirnradgetriebe 19 vom Zentralgetriebe des Häckslers 11 abgenommen und auf den jeweiligen Hauptantriebsstrang im Rahmenrohr 18 gegeben. Vom Hauptantriebsstrang aus werden über Winkelgetriebe die einzelnen Einzugs- und Mähtrommeln 1 bis 8 für ihren Umlauf mit gleicher Umfangsgeschwindigkeit um eine vertikale oder zumindest im wesentlichen vertikale Drehachse 20 angetrieben. Zwischen den jeweils benachbarten Teilerspitzen 15, 16, 17 ist jeweils eine Einzugs- und Schnittstelle für die zu erntenden Gutstengel ausgebildet, die sodann von den Einzugs- und Mähtrommeln 1 bis 8, deren Drehrichtung jeweils durch einen Bewegungspfeil kenntlich gemacht ist, durch je einen Förderkanal 21 beidseits der vertikalen Längsmittelebene 9 dem Häcksler 11 zugefördert werden.

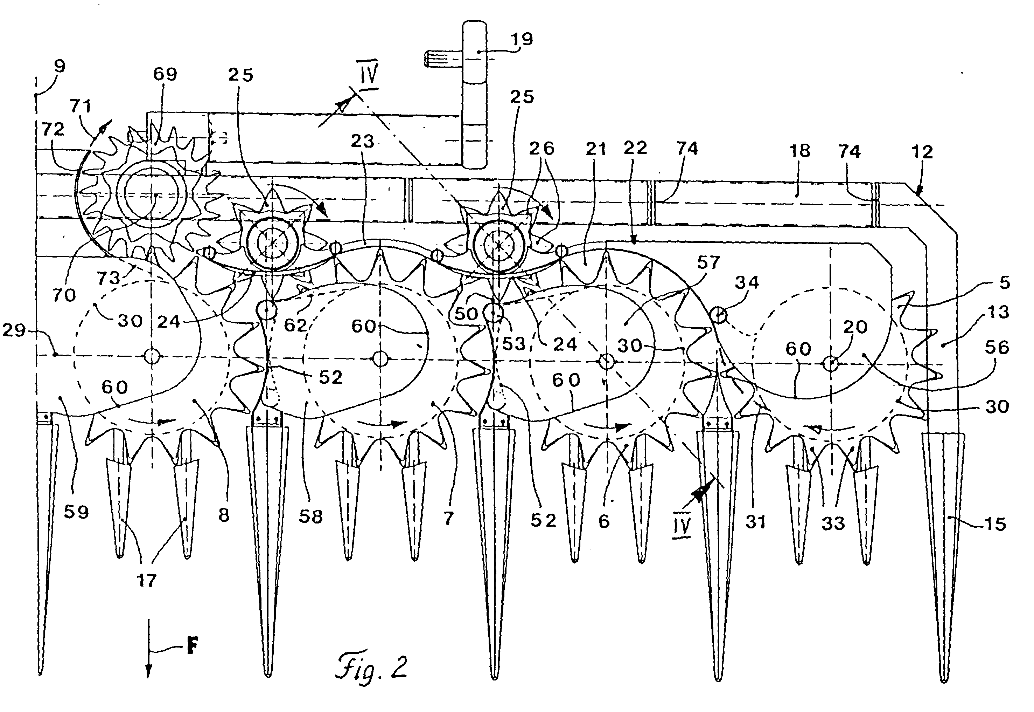

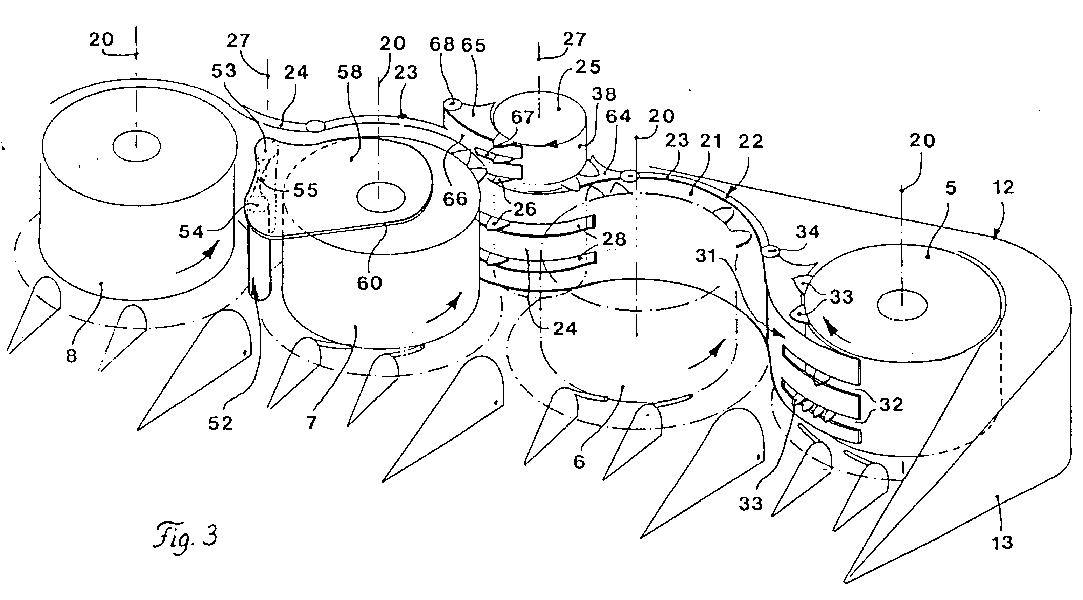

Die Förderkanäle 21 sind spiegelbildlich beidseits der vertikalen Längsmittelebene 9 ausgebildet, so daß zu ihrer Erläuterung die Beschreibung eines Förderkanals 21 ausreicht, wozu auf die Figuren 2 und 3 verwiesen sei, die den Förderkanal 21 gemäß der rechten Hälfte der Fig. 1 mit den Einzugs- und Mähtrommeln 5 bis 8 veranschaulichen.

Der Förderkanal 21 ist an der in Fahrtrichtung F vorderen Seite von den Einzugs- und Mähtrommeln 5 bis 8 und an der in Fahrtrichtung F hinteren Seite angrenzend an den Umfang der Einzugs- und Mähtrommeln 5 bis 8 von einer maschinenfesten Führungswand 22 begrenzt. Die Führungswand 22 ist in nicht näher dargestellter Weise am Maschinenrahmen 12 festgelegt. In Draufsicht hat die Führungswand 22 die Form einer sich quer zur Längsmittelebene 9 der Maschine ausbreitenden Welle in Form einer flachen Sinuskurve mit, in Fahrtrichtung F gesehen, dem Umfang der Einzugs- und Mähtrommeln 5 bis 8 bereichsweise folgenden Wellentälern 23 und Wellenkämmen 24 im Zwickelbereich zwischen zwei benachbarten Einzugs- und Mähtrommeln 6, 7 bzw. 7, 8.

Im Zwickelbereich zwischen den Mähtrommeln 6, 7 und 7, 8, d.h. je einem Wellenkamm 24 zugeordnet, ist je eine Querfördertrommel 25 für das geschnittene Erntegut angeordnet, die, wie die Einzugs- und Mähtrommeln 5 bis 8 mit abstehenden Mitnehmerzähnen 26 versehen ist und um eine im wesentlichen vertikale Achse 27 umläuft. Ihre Mitnehmerzähne 26 greifen durch Durchtrittsschlitze 28 in der Führungswand 22 in den Förderkanal 21 für das geschnittene Erntegut ein. Die Querfördertrommeln 25 sind in ihrer Größe dem Zwickelbereich zwischen zwei benachbarten Einzugs- und Mähtrommeln 1-8 angepaßt und entsprechend kleiner als diese ausgebildet. Bei dem dargestellten Beispiel beträgt der Durchmesser der Querfördertrommeln 25 einschl. der abstehenden Mitnehmerzähne 26 nur etwa die Hälfte des Durchmessers der Einzugs- und Mähtrommeln 1-8 einschl. der Mitnehmerzähne.

Der beschriebenen Ausbildung der Führungswand 22 entspricht eine Ausbildung der Einzugs- und Mähtrommeln 5 bis 8 mit einem gleichen Durchmesser und deren mit ihren Rotationsachsen 20 fluchtende Anordnung in einer gemeinsamen Querebene 29, die orthogonal zur Längsmittelebene 9 ausgerichtet ist.

Der Zwickelbereich zwischen der äußeren Einzugs- und Mähtrommel 5 und der nach innen nächstangrenzenden Einzugsund Mähtrommel 6 ist von einer Querfördertrommel freigehalten. In diesem Bereich läuft auch die flache Sinuswelle der Führungswand 22 in einer dem Trommelumfang 30 der äußeren Einzugs- und Mähtrommel 5 angeglichenen Bogenkontur aus. Im Endbereich der Führungswand 22 ist außerdem ein an den Umfang 30 der Einzugs- und Mähtrommel 5 herangeführter Abstreifer 31 mit Durchtrittsschlitzen 32 für von der Einzugs- und Mähtrommel 5 abstehende Mitnehmerzähne 33 vorgesehen. Der Abstreifer 31 ist mittels einer vertikalen Säule 34 am Maschinenrahmen 12 abgestützt.

Die äußere Einzugs- und Mähtrommel 5 könnte grundsätzlich auch andere, insbesondere im Durchmesser größere Abmessungen als die sich nach innen zum Häcksler 11 hin anschließenden Einzugs- und Mähtrommeln 6 bis 8 besitzen. Die Förderprobleme entstehen erst bei den sich nach innen zum Häcksler 11 hin anschließenden Einzugs- und Mähtrommeln 6 bis 8 durch die sich verstärkenden Erntegutströme, die von jeder Einzugs- und Mähtrommel 5 bis 8 erzeugt und schließlich zusammengefaßt an die Einschubwalzen 10 des Häckslers 11 übergeben werden müssen. Diese Förderbewegung der Erntegutströme unterstützen die Querfördertrommeln 25 im Zwickelbereich zwischen den inneren Einzugs- und Mähtrommeln 6 bis 8.

Wie die Figuren 2 und 3 besonders deutlich erkennen lassen, ist die Führungswand 22 im Bereich der dem Umfang 30 der Einzugs- und Mähtrommeln 6 bis 8 zugeordneten Wellentäler 23 von Durchtrittsschlitzen, wie den Schlitzen 28, freigehalten. Dies begünstigt eine schonende, zügige Förderung des Erntegutes entlang der insoweit glatt belassenen Führungswand 22 mittels der Mitnehmerzähne 33 der Einzugs- und Mähtrommeln 1 bis 8. Der Eingriff in den Förderkanal 21 durch die Mitnehmerzähne 26 der Querfördertrommeln 25 erfolgt nur im Zwickelbereich zwischen zwei nach innen aufeinanderfolgenden Einzugs- und Mähtrommeln 6 bis 8, wodurch einer Tendenz eines Förderstaus der im Zwickelbereich aufeinandertreffenden Teilströme des Erntegutes entgegengewirkt wird.

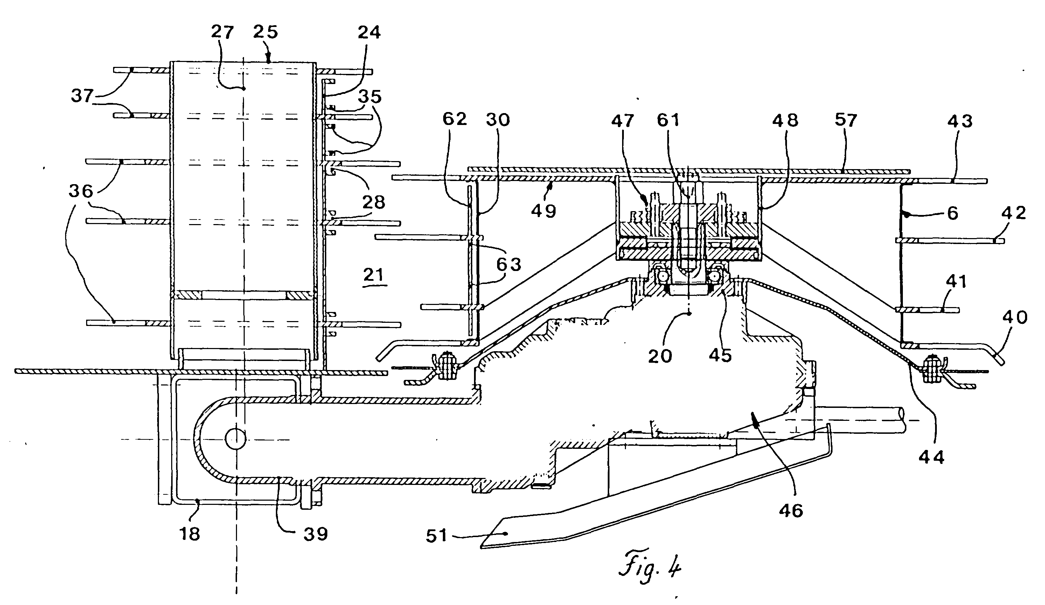

Dabei sind, wie Fig. 4 zeigt, die Durchtrittsschlitze 28 für die Mitnehmerzähne 26 der Querfördertrommeln 25 im Bereich der Wellenkämme 24 von abstehenden, in Schlitzlängsrichtung verlaufenden Nockenleisten 35 eingefaßt, die einerseits die Führungswand 22 in diesem Bereich versteifen und zum anderen eine Flächenunterbrechung bzw. -auflockerung herbeiführen, die einem Festklemmen des Erntegutes in diesem Übergangsbereich zwischen zwei Einzugs- und Mähtrommeln 6, 7 bzw. 7, 8 ihrerseits entgegenwirkt.

Fig. 4 zeigt ferner die Ausbildung der Querfördertrommeln 25 mit bei dem dargestellten Beispiel fünf in vertikalem Abstand übereinander angeordneten Kränzen 36 und 37 von Mitnehmerzähnen 26, deren dreieckige Grundgestalt mit nach außen ragender Dreieckspitze aus den Figuren 1 bis 3 ersichtlich ist. Die Zahnkränze 36 und 37 sind am Außenumfang 38 eines zylindrischen Rohrkörpers festgelegt, wobei die unteren drei Zahnkränze 36 einen ersten, größeren radialen Abstand vom Trommelumfang 38 aufweisen als die beiden oberen Zahnkränze 37.

Die Zahnkränze 37 sind in einem Bereich der Vertikalerstreckung der Querfördertrommeln 25 angeordnet, mit dem diese die Einzugs- und Mähtrommeln 5 bis 8 überragen, von denen in der geschnittenen Ansicht gemäß Fig. 4 die Einzugs- und Mähtrommel 6 zur Darstellung kommt. Ihren Antrieb für einen Umlauf um die vertikale Drehachse 27 mit einer der der Einzugs- und Mähtrommeln 5 bis 8 entsprechenden Umfangsgeschwindigkeit erhalten die Querfördertrommeln 25 über je ein mit dem Hauptantriebsstrang im Rahmenrohr 18 verbundenes Winkelgetriebe, das in Fig. 4 lediglich mit einem Getriebegehäuse 39 angedeutet ist.

Die Fig. 4 zeigt außerdem anhand der Einzugs- und Mähtrommel 6 die Ausbildung der untereinander gleich aufgebauten Einzugs- und Mähtrommeln 1 bis 8 mit drei im vertikalen Abstand übereinander angeordneten Kränzen 40 bis 43 von Mitnehmerzähnen, von denen die Mitnehmerzähne 33 der Zahnkränze 41 bis 43 die aus den Fig. 1 bis 3 ersichtliche dreieckige Grundform mit nach außen gerichteter Dreieckspitze aufweisen, während die Mitnehmerzähne des unteren Zahnkranzes 40 eine nach unten abgewinkelte, zum Beispiel nach außen verjüngte trapezförmige Gestalt aufweisen können, wie sie für ein Zusammenwirken mit dem unmittelbar unter dem Zahnkranz 40 umlaufenden kreisförmigen Mähmesser 44 zum Beispiel nach Art eines Sägerotors zweckmäßig ist.

Das Mähmesser 44 läuft im Betrieb der Maschine mit wesentlich höherer Umfangsgeschwindigkeit als die Zahnkränze 40 bis 43 um, so daß die Gutstengel nach Art eines Rotormähers im freien Schnitt von den Mähmessern 44 kurz oberhalb des Bodens abgetrennt werden. Hierzu ist das kreisscheibenförmige Mähmesser 44 mit seinem Innenrand an einem mit entsprechend hoher Winkelgeschwindigkeit umlaufenden Abtriebsteil 45 des in Fig. 4 nur schematisch mit einem Gehäuse 46 angedeuteten Winkelgetriebes für die Einzugsund Mähtrommel 6 befestigt, das mit dem Hauptantriebsstrang im Rahmenrohr 18 verbunden ist.

Vom Winkelgetriebe 46 wird ferner über eine Kupplung 47 mit entsprechender Untersetzung ein an dieser mit einer mittleren Nabe 48 festgelegter Trommelkörper 49 angetrieben, der den zylindrischen Umfang 30 der Einzugs- und Mähtrommeln 1 bis 8 definiert. Am Trommelkörper 49 sind die, wie die Zahnkränze 36 und 37 der Querfördertrommel 25, waagerecht und radial vom Umfang 30 abstehenden Zahnkränze 40 bis 43 für ihren Umlauf um die mit der Drehachse des Mähmessers 44 zusammenfallende Drehachse 20 abgestützt. In diesem Bereich des Förderkanals 21 wirken die Zahnkränze 40 bis 43 der Einzugs- und Mähtrommel 6 mit den Zahnkränzen 36 der Querfördertrommel 25 zur Förderung des Erntegutes zusammen. Die die Einzugs- und Mähtrommel 6 überragenden Zahnkränze 37 bewirken eine Weiterförderung etwaiger Gutstengel, die sich auf dem Wege ihrer Förderung zum Häcksler 11 hin über die Oberseite der Einzugs- und Mähtrommel 6 hochgeschoben haben.

Aus Fig. 4 ist ferner eine von mehreren unterseitigen Gleitkufen 51 zur bodenseitigen Abstützung der Maschine ersichtlich, die ihrerseits am Maschinenrahmen 12 abgestützt sind.

Für die Ausführung einer mit den Einzugs- und Mähtrommeln 6, 7 bzw. 7, 8 zusammenwirkenden Förderbewegung im Förderkanal 21 hat jede Querfördertrommel 25 eine - durch die eingezeichneten Bewegungspfeile kenntlich gemachte - gegenläufige Umlaufrichtung zu jeder der beiden Einzugsund Mähtrommeln 6, 7 bzw. 7, 8, denen sie im Zwickelbereich zwischen diesen zugeordnet ist. In Fahrtrichtung F gesehen ist dabei vor jeder Querfördertrommel 25 im Spalt zwischen den beiden jeweils benachbarten Einzugs- und Mähtrommeln 6, 7 bzw. 7, 8 ein Trennkörper 52 angeordnet, der ein erntegutförderndes Zusammenwirken der beiden Einzugsund Mähtrommeln 6, 7 bzw. 7, 8 miteinander in deren Trommelspalt verhindert. Der Trennkörper 52 ist, wie dies insbesondere auch aus Fig. 3 ersichtlich ist, von zwei unterseitig am Maschinenrahmen 12 abgestützten senkrechten Säulen 53 und 54 und zwei sich zwischen diesen erstreckenden Führungsplatten 55 gebildet, die jeweils bogenförmig entsprechend dem Umfang 30 der ihnen zugewandten Einzugs- und Mähtrommel 6 bzw. 7 oder 7 bzw. 8 ausgebildet ist.

Ein solcher Trennkörper 52 fehlt im Spalt zwischen der äußeren Einzugs- und Mähtrommel 5 und der nächstangrenzenden inneren Einzugs- und Mähtrommel 6. Hier besitzen die Einzugs- und Mähtrommeln 5 und 6 gegensinnige Umlaufrichtungen und bilden in entsprechend enger gegenseitiger Beabstandung in Richtung der Querebene 29 der Maschine gemeinsam einen Förderspalt für das von ihnen geschnittene Erntegut.

Oberseitig sind die Einzugs- und Mähtrommeln 1 bis 8 von maschinenfesten Abdeckplatten 56 bis 59 im Bereich ihres, bezogen auf den Häcksler 11, rückläufigen Rotationssektors übergriffen. Die Abdeckplatten 56 bis 59 sind, wie dies in Fig. 4 für die der Einzugs- und Mähtrommel 6 zugeordnete Abdeckplatte 57 dargestellt ist, ortsfest über einen Bolzen 61 mit der Kupplung 47 als einer ersten Befestigungsstelle verschraubt. Zumindest eine weitere Befestigungsstelle zur maschinenfesten Festlegung der Abdeckplatten 56 bis 59 ist für die Abdeckplatte 56 mittels der Säule 34 und für die Abdeckplatten 57 und 58 jeweils mittels der Säule 53 gebildet. Die mittlere Abdeckplatte 59, die sich beidseits der verikalen Längsmittelebene 9 der Maschine erstreckt, ist den beiden inneren Einzugsund Mähtrommeln 4 und 8 gemeinsam zugeordnet und an beiden Trommeln mittig, wie für die Abdeckplatte 57 der Einzugsund Mähtrommel 6 beschrieben, befestigt. Weitere Befestigungsstellen können in nicht näher dargestellter Weise am Maschinenrahmen 12, beispielsweise in einem sich zum Häcksler 11 hin erstreckenden Verlängerungsbereich der Abdeckplatte 59, vorgesehen sein.

Der Außenrand 60 der Abdeckplatten 57 und 58 hat, in Fahrtrichtung F gesehen, im vorderen Bereich der Einzugsund Mähtrommel 6, 7 vom Zahnfußkreis ihrer Mitnehmerzähne 33, der dem Trommelumfang 30 im wesentlichen entspricht, einen großen Abstand, der sich zum hinteren Ende der Einzugs- und Mähtrommel 6, 7 auf die Höhe des Zahnfußkreises verkleinert und tangential zu diesem ausläuft. Hierdurch ist der Einlaufbereich der Einzugs- und Mähtrommeln 6, 7, d.h. der, bezogen auf den Häcksler 11, vorauslaufende Rotationssektor, aggressiv ausgebildet und hat eine starke Förderwirkung auf das geschnittene Erntegut, während der hintere Bereich, zu Beginn des rücklaufenden Rotationssektors der Einzugs- und Mähtrommeln 6, 7, abgedeckt ist, um einer unerwünschten Rückförderung von Teilen des Erntegutes entgegenzuwirken.

Im einzelnen ist hierzu der Außenrand 60 der Abdeckplatte 57 bzw. 58 in deren hinterem, der angrenzenden Querfördertrommel 25 zugewandtem Bereich über den äußeren Kopfkreis der Mitnehmerzähne 33 ihrer Einzugs- und Mähtrommel 6 bzw. 7 hinausgeführt und an den äußeren Kopfkreis der Mitnehmerzähne 33 der nach innen benachbarten Einzugs- und Mähtrommel 7 bzw. 8 angenähert. Der hintere Bereich der Abdeckplatte 57, 58 bildet dabei gemeinsam mit dem hinteren Ende des Trennkörpers 52 an der vertikalen Stützsäule 53 eine vertikale Führungsnase zur Vereinigung der Erntegutströme, die von den beiden jeweiligen Einzugs- und Mähtrommeln 6 und 7 bzw. 7 und 8 mit ihren Mitnehmerzähnen 33 gefördert werden.

Die Vereinigung der Erntegutströme wird unterstützt durch je einen Abstreifer 62, der von der Stützsäule bzw. Führungsnase 53 an den Umfang 30 der nach außen benachbarten Einzugs- und Mähtrommel 7 bzw. 6 herangeführt ist. Die Wirkung des Abstreifers 62 entspricht der des Abstreifers 31 an der äußeren Einzugs- und Mähtrommel 5. Im einzelnen zeigt Fig. 4, daß der Abstreifer 62 mit Durchtrittsschlitzen 63 versehen ist, durch die sich die mittleren Zahnkränze 41 und 42 hindurcherstrecken, während sich der untere Zahnkranz 40 unterhalb und der obere Zahnkreis 43 oberhalb des Abstreifers 63 radial nach außen in den Förderkanal 21 erstreckt.

Auch den Querfördertrommeln 25 sind jeweils obere Abdeckplatten 64 und 65 in ihrem an die Führungswand 22 angrenzenden Bereich zugeordnet, vgl. insbesondere Fig. 3.

Die Abdeckplatte 64 ist nach außen, zur Rahmenseite 13 hin, angeordnet und liegt etwa in Höhe der Abdeckplatte 57 der benachbarten Einzugs- und Mähtrommel 6, derart, daß sie von den beiden oberen Zahnkränzen 37 der Querfördertrommel 25 übergriffen ist. Die Abdeckplatte 65 ist nach innen, zum Häcksler 11 hin, angeordnet und reicht in etwa an die Oberseite der Querfördertrommel 25 heran. Ein vertikaler Teil 66 der Abdeckplatte 65 ist an den Umfang 38 der Querfördertrommel 25 herangeführt und als Abstreifer mit einem mittleren Schlitz 67 ausgebildet, durch den sich die Mitnehmerzähne 26 des Zahnkranzes 37 erstrecken, während die Mitnehmerzähne 26 des oberen Zahnkranzes 36 und des oberen Zahnkranze 37 unterhalb des Abstreiferteils 66 bei ihrer Umlaufbewegung den Bereich des Förderkanals 21 durchlaufen. Die Abdeckplatten 64 und 65 sind jeweils über eine vertikale Stützsäule 68 ortsfest am Maschinenrahmen 12 abgestützt.

Der Außenrand 60 der Abdeckplatte 56 der äußeren Einzugsund Mähtrommel 5 läßt den vorderen bzw. vorauslaufenden Teil der Einzugs- und Mähtrommel 5 hinsichtlich ihrer Mitnehmerzähne 33 zwar ebenfalls unbedeckt, schneidet jedoch den dem Trommelumfang 30 entsprechenden Zahnfußkreis der Mitnehmerzähne 33 bereits kurz vor der Querebene 29 der Maschine, wie es sich für ein Zusammenwirken der Einzugsund Mähtrommeln 5 und 6 zur Förderung des geschnittenen Erntegutes durch den zwischen ihnen gebildeten Spalt hindurch als zweckmäßig erwiesen hat.

In Abhängigkeit von der Größe der Maschine, wie sie durch die Anzahl der zum Einsatz kommenden Einzugs- und Mähtrommeln 1 bis 8 und die damit definierte Gesamtarbeitsbreite bestimmt ist, und der damit einhergehenden Größe des Häckslers 11, insbesondere seines üblichen Häckselgebläserades, kann ein senkrechter Abstand zwischen der Horizontalebene, in der die Mähmesser 44 der Einzugs- und Mähtrommeln 1 bis 8 arbeiten, und der Horizontalebene des Einführspaltes vorhanden sein, der von den Einschubwalzen 10 des Häckslers 11 definiert ist. Zur Überbrückung dieses vertikalen Abstands kann es sich empfehlen, im Bereich zwischen der der vertikalen Längsmittelebene 9 der Maschine nächstgelegenen Querfördertrommel 25 und den den horizontalen Einführungsspalt für den Häcksler 11 definierenden Einschubwalzen 10 jeweils eine Schrägfördertrommel 69 beidseits der vertikalen Längsmittelebene 9 anzuordnen, die ihrerseits mit mehreren voneinander beabstandeten Kränzen von abstehenden Mitnehmerzähnen versehen ist. Die Schrägfördertrommeln 69 besitzen eine Anordnung und Ausgestaltung zur Übergabe des geschnittenen Ernteguts aus dem jeweils an die Längsmittelebene 9 angrenzenden Auslaufende des Förderkanals 21 und zur Einspeisung des Erntegutes in den Einführungsspalt zwischen den Einschubwalzen 10.

Zu diesem Zweck sind die beiden Schrägfördertrommeln 69 mit ihren Drehachsen 20 jeweils in einer zur vertikalen Längsmittelebene 9 der Maschine parallelen Vertikalebene zur Arbeitsebene der Einzugs- und Mähtrommeln 1 bis 8 geneigt angeordnet. Der Antrieb für die in Pfeilrichtung 71 umlaufenden Schrägfördertrommeln 69 ist vom Hauptantriebsstrang im Rahmenrohr 18 abgezweigt. Der Außenrand 60 der den beiden inneren Einzugs- und Mähtrommeln 4 und 8 zugeordneten Abdeckplatten 59 schließt sich hierbei eine S-Kurve bildend an eine dem Umfang der jeweiligen Schrägfördertrommel 69 folgende bogenförmige Führungswand 72 an, die zur Trommel 4 bzw. 8 hin durch einen an deren Umfang 30 herangeführten Abstreifer 73 (Fig. 2) beispielsweise nach Art des Abstreifers 31, verlängert ist.

Bei der dargestellten Maschine mit insgesamt acht Einzugsund Mähtrommeln 1 bis 8 entsprechend einer Arbeitsbreite um etwa 6 m erfolgt die Förderung des geschnittenen Erntegutes von außen nach innen durch den Förderkanal 21, unterstützt durch die Querfördertrommeln 25 und über die jeweilige Schrägfördertrommel 69 zu den Einschubwalzen 10 des Häckslers 11, wobei die Querfördertrommeln 25 den nach innen zu stärker werdenden Gutstrom zwangsläufig durch den Eingriff ihrer Mitnehmerzähne 26 in den Förderkanal 21 vorwärts, in Richtung auf den Häcksler 11, bewegen. Die Vereinigung und Weiterförderung der Erntegutströme kann dadurch weiter verbessert werden, daß die Querfördertrommeln 25 mit einem Abstand ihrer Drehachse 27 von der horizontalen Mittellinie 50 zwischen zwei benachbarten Einzugs- und Mähtrommeln 7, 6 bzw. 7, 8 zur jeweils äußeren Einzugs- und Mähtrommeln 7 bzw. 6 hin um ein Maß von etwa 10 bis 25 % der Breite des Förderkanals 21 versetzt sind, derart, daß die Mitnehmerzähne 26 der Querfördertrommeln 25 im Einlauf des Zwickelbereichs aggressiv fördern, sich aber im Auslauf aus dem Erntegutstrom im Hinblick auf dessen Volumenzunahme besser lösen.

In Fig. 2 mit 74 bezeichnetete Teilungsfugen des Maschinenrahmens 12 ermöglichen es, diesen nach dem Baukastenprinzip in Abhängigkeit von den zum Einsatz kommenden Einzugs- und Mähtrommeln 1 bis 8 zu verkleinern oder zu vergrößern.

## Patentansprüche

1. Maschine zum reihenunabhängigen Mähen und Häckseln von Mais und dgl. stengelartigem Erntegut, bei der innerhalb ihrer Arbeitsbreite zumindest je zwei um im wesentlichen vertikale Achsen rotierende, mit abstehenden Mitnehmerzähnen (33) versehene Einzugs- und Mähtrommeln (1 - 8) in Querausrichtung beidseits der vertikalen Längsmittelebene der Maschine einem mittigen Häcksler (11) mit Einschubwalzen (10) für das geschnittene Erntegut vorgeordnet sind, welches durch an den Umfang der Einzugs- und Mähtrommeln zum Häcksler hin angrenzende, maschinenfeste senkrechte Führungswände (22) umfassende Förderkanäle (21) den Einschubwalzen des Häckslers zugeführt wird, **dadurch gekennzeichnet**, daß die Führungswände (22) zum Häcksler (11) hin beidseits der vertikalen Längsmittelebene (9) in Draufsicht die Form einer sich quer zur Längsmittelebene (9) der Maschine ausbreitenden Welle mit, in Fahrtrichtung (F) gesehen, dem Umfang (30) der Einzugs- und Mähtrommeln (1 - 8) bereichsweise folgenden Wellentälern (23) und Wellenkämmen (24) im Zwickelbereich zwischen zwei benachbarten Einzugs- und Mähtrommeln (2-4;6-8) besitzen und daß im Bereich der Wellenkämme (24) je eine Querfördertrommel (25) für das geschnittene Erntegut angeordnet ist, die ihrerseits mit abstehenden Mitnehmerzähnen (26) versehen ist und um eine im wesentlichen vertikale Achse (27) umläuft und deren Mitnehmerzähne (26) durch Durchtrittsschlitze (28) in der Führungswand (22) in den Förderkanal (21) für das geschnittene Erntegut eingreifen.

2. Maschine nach Anspruch 1, dadurch gekennzeichnet, daß die Wellenform der Führungswände (22) zum Häcksler (11) hin einer flachen Sinuskurve entspricht.

3. Maschine nach Anspruch 1 oder 2, dadurch gekennzeichnet, daß bei mehr als jeweils zwei beidseits der vertikalen Längsmittelebene (9) vorgesehenen Einzugs- und Mähtrommeln (1-8) zumindest jeweils die beiden inneren, an die vertikale Längsmittelebene (9) angrenzenden Einzugsund Mähtrommeln (3,4;7,8) den gleichen Durchmesser aufweisen und mit ihren Achsen (20) fluchtend in einer gemeinsamen, orthogonal zur Längsmittelebene (9) ausgerichteten Querebene (29) angeordnet sind.

4. Maschine nach Anspruch 3, dadurch gekennzeichnet, daß der Zwickelbereich zwischen der jeweils äußeren Einzugsund Mähtrommel (1;5) und der nach innen nächstangrenzenden Einzugs- und Mähtrommel (2;6) von einer Querfördertrommel (25) freigehalten ist.

5. Maschine nach Anspruch 4, dadurch gekennzeichnet, daß die Wellenform der Führungswände (22) beidseits der vertikalen Längsmittelebene (9) im Zwickelbereich zwischen der jeweiligen äußeren Einzugs- und Mähtrommel (1;5) und der nächstangrenzenden inneren Einzugs- und Mähtrommel (2;6) in einer dem Trommelumfang (30) der äußeren Einzugsund Mähtrommel (1;5) angeglichenen Bogenkontur ausläuft.

6. Maschine nach Anspruch 5, dadurch gekennzeichnet, daß die Führungswand (22) an der äußeren Einzugs- und Mähtrommel (1;5) in einem an deren Umfang (30) herangeführten Abstreifer (31) mit Durchtrittschlitzen (32) für die Mitnehmerzähne (33) der äußeren Einzugs- und Mähtrommel (1;5) ausläuft.

7. Maschine nach einem der Ansprüche 1 bis 6, dadurch gekennzeichnet, daß die Führungswand (22) im Bereich der dem Umfang (30) der Einzugs- und Mähtrommeln (2,3;6,7) zugeordneten Wellentäler (23) ihrer Wellenkontur von Durchtrittsschlitzen (28) freigehalten ist.

8. Maschine nach einem der Ansprüche 1 bis 7, dadurch gekennzeichnet, daß die Durchtrittsschlitze (28) der Führungswand (22) im Bereich der dem Umfang (38) der Querfördertrommeln (25) zugeordneten Wellenkämme (24) von abstehenden, in Schlitzlängsrichtung verlaufenden Nockenleisten (35) eingefaßt sind.

9. Maschine nach einem der Ansprüche 1 bis 8, dadurch gekennzeichnet, daß, in Fahrtrichtung (F) gesehen, vor jeder Querfördertrommel (25) im Spalt zwischen den beiden jeweils benachbarten Einzugs- und Mähtrommeln (2-4;6-8) ein Trennkörper (52) angeordnet ist, der ein erntegutförderndes Zusammenwirken der beiden Einzugs- und Mähtrommeln (2-4;6-8) in deren Trommelspalt verhindert.

10. Maschine nach einem der Ansprüche 1 bis 9, dadurch gekennzeichnet, daß die Querfördertrommel (25) eine gegenläufige Umlaufrichtung zu jeder der beiden Einzugs- und Mähtrommeln (2-4;6-8) hat, denen sie im Zwickelbereich zwischen diesen zugeordnet ist.

11. Maschine nach einem der Ansprüche 1 bis 10, dadurch gekennzeichnet, daß die Querfördertrommeln (25) eine größere Vertikalerstreckung als die Einzugs- und Mähtrommeln (1-8) besitzen.

12. Maschine nach einem der Ansprüche 1 bis 11, dadurch gekennzeichnet, daß die Querfördertrommeln (25) mit einem etwa 10 bis 25% der Breite des Förderkanals (21) entsprechenden Abstand ihrer Drehachse (27) von der horizontalen Mittellinie (50) zwischen zwei benachbarten Einzugs- und Mähtrommeln (6,7;7,8) nach außen versetzt angeordnet sind.

13. Maschine nach einem der Ansprüche 4 bis 12, dadurch gekennzeichnet, daß die jeweils äußere Einzugs- und Mähtrommel (1;5) und die nächstangrenzende innere Einzugsund Mähtrommel (2;6) gegensinnige Umlaufrichtungen besitzen und gemeinsam einen Förderspalt für geschnittenes Erntegut bilden.

14. Maschine nach einem der Ansprüche 1 bis 13, dadurch gekennzeichnet, daß die Einzugs- und Mähtrommeln (1-8) oberseitig von maschinenfesten Abdeckplatten (56-59) im Bereich ihres, bezogen auf den Häcksler (11), rückläufigen Rotationssektors übergriffen sind.

15. Maschine nach Anspruch 14, dadurch gekennzeichnet, daß der Außenrand (60) der Abdeckplatte (56-59), in Fahrtrichtung (F) gesehen, im vorderen Bereich der Einzugs- und Mähtrommel (1-8) vom Zahnfußkreis ihrer Mitnehmerzähne (33) einen großen Abstand besitzt, der sich zum hinteren Bereich der Einzugs- und Mähtrommel (1-8) auf die Höhe des Zahnfußkreises verkleinert und im wesentlichen in tangentialer Verlängerung zu diesem ausläuft.

16. Maschine nach Anspruch 14 oder 15, dadurch gekennzeichnet, daß der Außenrand (60) der Abdeckplatte (57,58) in deren hinterem, der angrenzenden Querfördertrommel (3,4;7,8) zugewandtem Bereich über den äußeren Kopfkreis der Mitnehmerzähne ihrer Einzugs- und Mähtrommel (2,3;6,7) hinausgeführt und an den äußeren Kopfkreis der Mitnehmerzähne (33) der nach innen benachbarten Einzugs- und Mähtrommel (3,4;7,8) angenähert ist.

17. Maschine nach Anspruch 16, dadurch gekennzeichnet, daß der hintere Bereich der Abdeckplatte (57,58) gemeinsam mit dem hinteren Ende des Trennkörpers (52) zwischen den beiden jeweiligen Einzugs- und Mähtrommeln (2-4;6-8) eine vertikale Führungsnase zur Vereinigung der von den beiden Einzugs- und Mähtrommeln (2-4;6-8) jeweils geförderten Erntegutströme bildet.

18. Maschine nach Anspruch 17, dadurch gekennzeichnet, daß die Führungsnase mit einem an den Umfang (30) der nach außen benachbarten Einzugs- und Mähtrommel (3,2;7,6) herangeführten Abstreifer (62) versehen ist.

19. Maschine nach einem der Ansprüche 1 bis 18, dadurch gekennzeichnet, daß den Querfördertrommeln (25) jeweils obere Abdeckplatten (64,65) in ihrem an die Führungswand (22) angrenzenden Bereich zugeordnet sind.

20. Maschine nach Anspruch 19, dadurch gekennzeichnet, daß von den beiden Abdeckplatten (64,65) eine nach außen gelegene erste Abdeckplatte (64) in Höhe der Abdeckplatte (57,58) der benachbarten Einzugs- und Mähtrommel (2,3;6,7) und unterhalb zumindest eines oberen Kranzes (37) von sie übergreifenden Mitnehmerzähnen (26) der Querfördertrommel (25) angeordnet ist, während eine nach innen, zum Häcksler (11) hin gelegene zweite Abdeckplatte (65) in etwa an die Oberseite der Querfördertrommel (25) heranreicht und umfangsseitig als Abstreifer (66) ausgebildet ist.

21. Maschine nach einem der Ansprüche 1 bis 20, dadurch gekennzeichnet, daß im Bereich zwischen der der vertikalen Längsmittelebene (9) der Maschine nächstgelegenen Querfördertrommel (4,8) und den einen Einführungsspalt für den Häcksler (11) definierenden Einschubwalzen (10) jeweils eine einen vertikalen Abstand zwischen der Arbeitsebene der Einzugs- und Mähtrommeln (1-8) und der Einführungsspaltebene überbrückende Schrägfördertrommel (69) beidseits der vertikalen Längsmittelebene (9) in einer Anordnung und Ausgestaltung zur Übernahme des Ernteguts aus dem jeweils an die Längsmittelebene (9) angrenzenden Auslaufende des Förderkanals (21) und zu dessen Einspeisung in den Einführungsspalt angeordnet ist.

## Claims

1. A machine for the row-independent mowing and chopping of maize and like stalk crops in which, within its working width and rotating about respective substantially vertical axes and provided with projecting drive teeth (33), there are at least two draw-in and mowing drums (1-8) in a transverse direction on both sides of the vertical longitudinal central plane of the machine, disposed ahead of a central chopper (11) with push-in rollers (10) for the cut crop which is fed to the push-in rollers of the chopper through conveyor channels (21) having vertical guide walls (22) rigid with the machine and bounding the periphery of the draw-in and mowing drums in the direction of the chopper, characterised in that, towards the chopper (11) and on both sides of the vertical longitudinal central plane (9) and in plan view the guide walls (22) have the form of a wave propagating crosswise to the longitudinal central plane (9) of the machine and with, viewed in the direction of travel (F), wave valleys (23) and wave peaks (24) parts of which follow the periphery (30) of the draw-in and mowing drums (1 to 8), in the nip zone between two adjacent draw-in and mowing drums (2-4; 6-8) and in that, in the region of the wave peaks (24), there is in each case a transverse conveyor drum (25) for the cut crop and which is provided with projecting drive teeth (26) and rotates about a substantially vertical axis (27), its drive teeth (26) engaging through slots (28) in the guide wall (22) and into the conveyor channel (21) for the cut crop.

2. A machine according to Claim 1, characterised in that the wave form of the guide walls (22) towards the chopper (11) corresponds to a shallow sinusoidal curve.

3. A machine according to Claim 1 or 2, characterised in that if there are more draw-in and mowing drums (1-8), provided in each case two on either side of the vertical longitudinal central plane (9), then at least the two inner draw-in and mowing drums (3,4,;7,8) which are adjacent to the vertical longitudinal central plane (9) have the same diameter having their axes (20) disposed aligned in a common transverse plane (29) which is orientated at right-angles to the longitudinal central plane (9).

4. A machine according to Claim 3, characterised in that the nip area between the respectively outer draw-in and mowing drums (1;5) and the inwardly closest adjacent draw-in and mowing drum (2;6) is kept free by a transverse conveyor drum (25).

5. A machine according to Claim 4, characterised in that the wave form of the guide wall (22) on both sides of the longitudinal central plane (9), in the nip zone between the respective outer draw-in and mowing drums (1;5) and the closest adjacent inner draw-in and mowing drum (2;6) runs out in an arcuate contour which is similar to the drum periphery (30) of the outer draw-in and mowing drum (1;5).

6. A machine according to Claim 5, characterised in that the guide wall (22), at the outer draw-in and mowing zone (1;5), runs out in a scraper (31) guided along its periphery (30) and having through-way slots (32) for the drive teeth (33) of the outer draw-in and mowing drum (1;5).

7. A machine according to one of Claims 1 to 6, characterised in that in the region of the wave valleys (23) associated with the periphery (33) of the draw-in and mowing drums (2,3,;6,7) the guide wall (22) is maintained free of slots (28) in its wave contour.

8. A machine according to one of Claims 1 to 7, characterised in that in the guide wall (22) the throughway slots (28) are in the region of the wave peaks (24) associated with the periphery (28) of the transverse conveyor drums (25) embraced by projecting strips (35) extending in the longitudinal direction of the slots.

9. A machine according to one of Claims 1 to 8, characterised in that, viewed in the direction of travel (F), there is upstream of each transverse conveyor drum (25) in the gap between the two respectively adjacent draw-in and mowing drums (2-4;6-8) a separating member (52) which prevents a crop-conveying interaction of the two draw-in and mowing drums (2-4;6-8) in their drum gap.

10. A machine according to one of Claims 1 to 9, characterised in that the transverse conveyor drum (25) has an opposite direction of rotation to that of the two draw-in and mowing drums (2-4;6-8) with which it is associated in the nip zone between them.

11. A machine according to one of Claims 1 to 10, characterised in that the transverse conveyor drums (25) have a greater vertical extension than that of the draw-in and mowing drums (1-8).

12. A machine according to one of Claims 1 to 11, characterised in that the transverse conveyor drums (25) are outwardly offset in their disposition by a gap corresponding to about 10 to 25% of the width of the conveyor channel (21) in their axis of rotation (27) from the horizontal central line (50) between two adjacent draw-in and mowing drums (6,7;7,8).

13. A machine according to one of Claims 4 to 12, characterised in that the respectively outer draw-in and mowing drum (1;5) and the closest adjacent draw-in and mowing drum (2;6) rotate in opposite directions and jointly form a conveyor gap for cut crop.

14. A machine according to one of Claims 1 to 13, characterised in that cover plates (56-59) which are rigid with the machine engage over the top portion of the draw-in and mowing drums (1-8) in the region of their segment which rotates backwards in relation to the chopper (11).

15. A machine according to Claim 14, characterised in that, viewed in the direction of travel (F) and in the forward portion of the draw-in and mowing drum (1-8), the outer edge (60) of the cover plate (56-69) is at a considerable distance from the root base circle of its drive teeth (33) and diminishes towards the rear region of the draw-in and mowing drum (1-8) to the height of the tooth root circle, running out essentially as a tangential extension thereof.

16. A machine according to Claim 14 or 15, characterised in that the rear portion of the outer edge (60) of the cover plate (57, 58), which is towards the adjacent transverse conveyor drum (3,4;7,8) is extended beyond the outer head circle of the drive teeth of the draw-in and mowing drums (2,3;6,7) while being close to the outer head circle of the drive teeth (33) of the inwardly adjacent draw-in and mowing drums (3,4;7,8).

17. A machine according to Claim 16, characterised in that the rear part of the cover plate (57,58), together with the rear end of the separating body (52) between the two respective draw-in and mowing drums (2-4;6-8) forms a vertical guide projection for combining the streams of crop respectively delivered by the two draw-in and mowing drums (2-4;6-8).

18. A machine according to Claim 17, characterised in that the guide nose is provided with a scraper (62) which is passed over the periphery (33) of the outwardly adjacent draw-in and mowing drum (3,2;7,6).

19. A machine according to one of Claims 1 to 18, characterised in that in their portion adjacent the guide wall (22) respectively upper cover plates (64,65) are associated with the transverse conveyor drums (25).

20. A machine according to Claim 19, characterised in that, of the two cover plates (64,65), an outwardly situated first cover plate (64) is disposed at the height of the cover plate (57,58) of the adjacent draw-in and mowing drum (2,3;6,7) and below at least one upper ring (37)of drive teeth (26) engaging over it on the transverse conveyor drum (25) while a second cover plate (65) disposed inwardly towards the chopper extends substantially to the top of the transverse conveyor drum (25) and is on its periphery constructed as a scraper (66).

21. A machine according to one of Claims 1 to 20, characterised in that, in the region between the transverse conveyor drums (4,8) which are most closely situated to the vertical longitudinal plane (9) of the machine and the push-in rolls (10) which define an insertion gap for the chopper (11), there is in each case, bridging a vertical gap between the working plane of the draw-in and working drums (1-8) and the insertion gap bridging oblique conveyor drums (69) on both sides of the vertical longitudinal plane (9), in an arrangement and configuration to take over the crop from whichever is the outlet end of the conveyor channel (21) adjacent the longitudinal central plane (9) and to feed it into the insertion gap.

## Revendications

1. Machine pour le fauchage et le hachage, sans tenir compte de l'alignement des rangées, de maïs et de plantes à tiges similaires, dans laquelle, sur sa largeur de travail, on agence au moins respectivement deux tambours d'arrachage et de fauchage (1-8) tournant autour d'axes sensiblement verticaux et pourvus de dents d'entraînement saillantes (33) dans la direction transversale des deux côtés du plan central longitudinal vertical de la machine devant une hacheuse centrale (11) avec des cylindres d'introduction (10) pour les plantes coupées qui sont acheminées par des canaux d'acheminement (21) comprenant des parois de guidage verticales (22) fixées à la machine limitrophe à la périphérie des tambours d'arrachage et de fauchage vers la hacheuse aux cylindres d'introduction de la hacheuse, caractérisée en ce que les parois de guidage (2) menant vers la hacheuse (11) possèdent, des deux côtés du plan central longitudinal vertical (9) en vue de dessus, la forme ondulée s'étendant transversalement au plan central longitudinal (9) de la machine avec, en observant dans le sens de déplacement (F), des creux (23) et des crêtes (24) suivant la périphérie (30) des tambours d'arrachage et de fauchage (1 à 8) par endroits dans la zone de bourrage comprise entre deux tambours d'arrachage et de fauchage voisins (2-4; 6-8) et en ce que, dans la zone des crêtes (24), est agencé respectivement un tambour de transport transversal (25) pour les plantes coupées, qui est pourvu pour sa part de dents d'entraînement saillantes (28) et tourne autour d'un axe sensiblement vertical (27) et dont les dents d'entraînement (26) s'engagent à travers des fentes de passage (28) dans la paroi de guidage (22) dans le canal d'acheminement (21) pour les plantes coupées.

2. Machine selon la revendication 1, caractérisée en ce que la forme ondulée des parois de guidage (22) vers la hacheuse (11) correspond à une courbe sinusoïdale plate.

3. Machine selon la revendication 1 ou 2, caractérisée en ce que, lorsqu'il y a plus de deux tambours d'arrachage et de fauchage (1-8) prévus respectivement des deux côtés du plan central longitudinal vertical (9), au moins respectivement les deux tambours d'arrachage et de fauchage internes (3,4; 7,8) limitrophes au plan central longitudinal vertical (9) présentent le même diamètre et sont agencés avec leurs axes (20) s'alignant dans un plan transversal (29) commun orienté perpendiculairement par rapport plan central longitudinal (9).

4. Machine selon la revendication 3, caractérisée en ce que la zone de bourrage comprise entre les tambours d'arrachage et de fauchage (1;5) respectivement externes et les tambours d'arrachage et de fauchage (2;6) directement limitrophes vers l'intérieur ne comporte pas de tambour de transport transversal (25).

5. Machine selon la revendication 4, caractérisée en ce que la forme ondulée des parois de guidage (22) s'étendant des deux côtés du plan central longitudinal vertical (6) dans la zone de bourrage entre les tambours d'arrachage et de fauchage (1;5), respectivement externes et les tambours d'arrachage et de fauchage internes (2;6) immédiatement limitrophes se termine par un contour arqué épousant la périphérie de tambour (30) des tambours d'arrachage et de fauchage externes (1;5).

6. Machine selon la revendication 5, caractérisée en ce que la paroi de guidage (22) se termine, sur les tambours d'arrachage et de fauchage externes (1;5), par une racle rapprochée de leur périphérie (30) avec des fentes de passage (32) pour les dents d'entraînement (33) des tambours d'arrachage et de fauchage externes (1;5).

7. Machine selon l'une quelconque des revendications 1 à 6, caractérisée en ce que la paroi de guidage (22) ne possède pas, dans la zone des crêtes (23) de son contour ondulé affectées à la périphérie (30) des tambours d'arrachage et de fauchage (2,3; 6,7), de fentes de passage (28).

8. Machine selon l'une quelconque des revendications 1 à 7, caractérisée en ce que les fentes de passage (28) de la paroi de guidage (22) sont bordées, dans la zone des creux (24) affectés à la périphérie (38) des tambours de transport transversal (25), d'éclisses à ergots (35) s'étendant dans la direction longitudinale des fentes.

9. Machine selon l'une quelconque des revendications 1 à 8, caractérisée en ce que, en observant dans le sens de déplacement (F), on agence devant chaque tambour de transport transversal (25), dans la fente comprise entre les deux tambours d'arrachage et de fauchage (2-4; 6-8) respectivement voisins, un corps de séparation (52), qui empêche une coopération d'acheminement de plantes des deux tambours d'arrachage et de fauchage (2-4; 6-8) dans leur fente de bourrage.

10. Machine selon l'une quelconque des revendications 1 à 9, caractérisée en ce que le tambour de transport transversal (25) a un sens de rotation opposé à celui de chacun des deux tambours d'arrachage et de fauchage (2-4; 6-8), auxquels il est affecté dans la zone de bourrage entre ces tambours.

11. Machine selon l'une quelconque des revendications 1 à 10, caractérisée en ce que les tambours de transport transversal (25) possèdent une extension verticale plus grande que celle des tambours d'arrachage et de fauchage (1-8).

12. Machine selon l'une quelconque des revendications 1 à 11, caractérisée en ce que les tambours de transport transversal (25) sont agencés décalés vers l'extérieur d'une distance de leur axe de rotation (27) correspondant approximativement à 10 à 25% de la largeur du canal d'acheminement (21) de la ligne centrale horizontale (50) entre deux tambours d'arrachage et de fauchage voisins (6,7; 7,8).

13. Machine selon l'une quelconque des revendications 4 à 12, caractérisée en ce que les tambours d'arrachage et de fauchage externes respectifs (1;5) et les tambours d'arrachage et de fauchage internes (2;6) directement limitrophes présentent des sens de rotation opposés et forment conjointement une fente d'acheminement pour les plantes coupées.

14. Machine selon l'une quelconque des revendications 1 à 13, caractérisée en ce que les tambours d'arrachage et de fauchage (1-8) sont couverts, dans la partie supérieure, par des plaques de recouvrement (56-57) fixées à la machine dans la zone de leur secteur de rotation tournant en sens inverse par rapport à la hacheuse (11).

15. Machine selon la revendication 14, caractérisée en ce que le bord externe (60) de la plaque de recouvrement (56-59), observé dans le sens de déplacement (F), possède, dans la zone avant des tambours d'arrachage et de fauchage (1-8) du cercle de pied de leurs dents d'entraînement (33),une grande distance qui diminue dans la zone arrière des tambours d'arrachage et de fauchage (1-8), à la hauteur du cercle de pied des dents et se termine essentiellement par un prolongement tangentiel à celui-ci.

16. Machine selon la revendication 14 ou 15, caractérisée en ce que le bord externe (60) de la plaque de recouvrement (57, 58) est guidé, dans sa zone arrière tournée vers le tambour de transport transversal limitrophe (3,4; 7,8), sur le cercle de tête externe des dents d'entraînement de ses tambours d'arrachage et de fauchage (2,3;6,7) et se rapproche du cercle de tête extérieur des dents d'entraînement (33) des tambours d'arrachage et de fauchage (3,4; 7,8) qui sont voisins vers l'intérieur.

17. Machine selon la revendication 16, caractérisée en ce que la zone arrière de la plaque de recouvrement (57, 58) forme, conjointement avec l'extrémité arrière du corps de séparation (52) entre les deux tambours d'arrachage et de fauchage respectifs (2-4; 6-8), un ressaut de guidage vertical pour regrouper les courants de plantes respectivement acheminés par les deux tambours d'arrachage et de fauchage (2-4; 6-8).

18. Machine selon la revendication 17, caractérisée en ce que le ressaut de guidage est pourvu d'une racle (62) rapproché de la périphérie (30) des tambours d'arrachage et de fauchage (3,2; 7,6) voisins vers l'extérieur.

19. Machine selon l'une quelconque des revendications 1 à 18, caractérisée en ce que, respectivement, des plaques de recouvrement supérieures (64,65) sont affectées aux tambours de transport transversal (25) dans leur zone limitrophe de la paroi de guidage (22).

20. Machine selon la revendication 19, caractérisée en ce que, parmi les deux plaques de recouvrement (64,65), une première plaque de recouvrement (64) disposée vers l'extérieur est agencée à hauteur de la plaque de recouvrement (57, 58) des tambours d'arrachage et de fauchage voisins (2,3; 6,7) et en dessous d'au moins une couronne supérieure (37) de dents d'entraînement (26) qui s'y engagent du tambour de transport transversal (25), tandis qu'une seconde plaque de recouvrement (65) située vers l'intérieur en direction de la hacheuse (11) atteint approximativement la partie supérieure du tambour de transport transversal (25) et se présente sous la forme d'une racle (66) sur la périphérie.

21. Machine selon l'une quelconque des revendications 1 à 20, caractérisée en ce que, dans la zone comprise entre les tambours de transport transversal (4,8) situés le plus près du plan central longitudinal vertical (9) de la machine et les cylindres d'introduction (10) définissant une fente d'introduction pour la hacheuse (11), on agence respectivement un tambour de transport en oblique (69) recouvrant une distance verticale comprise entre le plan de travail des tambours d'arrachage et de fauchage (1-8) et le plan de la fente d'introduction, des deux côtés du plan central longitudinal vertical (9) dans un agencement et une conformation permettant de transférer les plantes depuis l'extrémité de sortie du canal d'acheminement (21) respectivement limitrophe au plan central longitudinal (9) et leur acheminement dans la fente d'entrée.
